(19) Europäisches Patentamt
European Patent Office
Office européen des brevets

(11) **EP 2 028 445 A2**

(12) **EUROPÄISCHE PATENTANMELDUNG**

(43) Veröffentlichungstag:
**25.02.2009 Patentblatt 2009/09**

(51) Int Cl.:
***G01C 21/34*** *(2006.01)*

(21) Anmeldenummer: 08104593.2

(22) Anmeldetag: **01.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **14.08.2007   DE 102007038424**

(71) Anmelder: **ROBERT BOSCH GMBH**
**70442 Stuttgart (DE)**

(72) Erfinder: **Vogel, Andreas**
**31139, Hildesheim (DE)**

(54) **Verfahren und Vorrichtung zur Bestimmung einer Route in einem Streckennetz**

(57)    Ein Verfahren zur Bestimmung einer Route aus Streckenabschnitten umfasst die Schritte des Bereitstellens von Start- und Zieldaten für die Route, des Bereitstellens von Streckeninformationen zur Beschreibung eines Streckennetzes, wobei jedem Streckenabschnitt des Streckennetzes eine Kurvigkeitsangabe zugeordnet ist, und des Bereitstellens einer optimalen Route abhängig von der Kurvigkeitsangabe, wobei die optimale Route mit einem Optimierungsverfahren durch Auswählen aus einer Anzahl von möglichen Routen entsprechend eines abhängig von den Kurvigkeitsangaben ermittelten Kostenwerts bestimmt wird.

Bei einem Verfahren zur Darstellung eines Streckennetzes in einer Kartendarstellung wird für jeden Streckenabschnitt ein mittlerer Kurvigkeitswert angezeigt, z.B. durch eine Linienstärke, eine Farbigkeit oder eine Helligkeit des angezeigten Streckenabschnittes.

**Fig. 1**

EP 2 028 445 A2

**Beschreibung**

Technisches Gebiet

Die vorliegende Erfindung betrifft ein Verfahren zur Bestimmung einer Route in einem Streckennetz aus Streckenabschnitten und ein Navigationssystem zur Durchführung des Verfahrens.

Stand der Technik

Es gibt bereits zahlreiche Versionen von Navigationssystemen, welche entsprechend den unterschiedlichen Bedürfnissen von Fahrern optimale Routen unter Beachtung gewisser Optionen und Präferenzen bereitstellen können. So wird, je nach Einstellung, nicht immer nur die kürzeste Route zwischen einem Start- und einem Zielpunkt bereitgestellt, sondern es kann auch die Route mit der voraussichtlich kürzesten Fahrzeit ermittelt werden, oder es kann eingestellt werden, dass die Route beispielsweise Tunnel, Mautstraßen oder Autobahnen meidet. Diese Optionen können auch beliebig miteinander kombiniert werden.

Bei der Auswahl der unter den gegebenen Optionen optimalen Route aus einem Streckennetz von Streckenabschnitten wird in der Regel jedem Streckenabschnitt ein Kostenwert abhängig von dem zu optimierenden Parameter, wie z.B. abhängig von der für diesen Streckenabschnitt benötigten Fahrzeit, zugeteilt und die Route mit den geringsten Gesamtkosten ausgewählt. Wenn bestimmte Straßentypen bei der Auswahl der Route gemieden werden sollen, werden Streckenabschnitte, welche diesen Straßentyp aufweisen, mit sehr hohen Kostenwerten versehen.

Obwohl somit bereits eine Vielzahl von Optionen zur Auswahl einer für einen bestimmten Fahrer und/ oder ein bestimmtes Fahrzeug besonders gut geeigneten Route bekannt sind, ist es bei herkömmlichen Navigationssystemen nicht möglich, gezielt Routen auswählen zu lassen, welche für den Fahrer besonders angenehm zu fahren sind, d.h., welche z.B. möglichst wenige enge Kurven aufweisen, so dass Fahrer und Passagiere möglichst wenig unangenehmen Querkräften ausgesetzt sind, die bei empfindlichen Personen zu Übelkeit führen können, und so dass die Fahrzeuginsassen ohne viele Abbrems- und Schaltmanöver zügig und stressfrei zum Ziel gelangen kann. Dies gilt insbesondere auch für Krankentransporte. Andererseits suchen beispielsweise Motorradfahrer gezielt nach besonders kurvigen Routen, da diese mit dem Motorrad wiederum interessanter und angenehmer zu befahren sind.

Weiterhin ist es für Fahrer von LKWs oder von langen Gespannen wichtig, eine Route zu finden, die keine für dieses Fahrzeug unpassierbaren, zu engen Kurven und Kreuzungen enthält.

Aus der deutschen Patentanmeldung Nr. DE 103 61 407 A1 ist es bereits bekannt, aus den Knotenpunktkoordinaten einer Straße den Kurvenradius dieser Straße zu bestimmen und mit einem vorher festgesetzten Grenzwert zu vergleichen. Wenn eine bereits ausgewählte Route Kurven mit einem Radius enthält, welche kleiner sind als dieser Grenzwert, werden die Suchkosten dieser Route entsprechend erhöht und es wird eine Alternativroute gesucht.

Dieses bekannte Verfahren weist einerseits den Nachteil auf, dass nicht zuverlässig eine passierbare und komfortabel zu fahrende Route bestimmt werden kann, da die Alternativroute nicht auf die Unpassierbarkeit wegen zu enger Kurven überprüft wird, und andererseits bedingt dieses Verfahren einen erhöhten Rechenaufwand, da die Unpassierbarkeit einer Route erst nach erfolgter Routenermittlung überprüft wird, anstatt dass unpassierbare Straßen bereits vor der Routenermittlung aus der Suche ausgenommen werden können.

Es ist Aufgabe der vorliegenden Erfindung, ein Verfahren zur Ermittlung von Routen und ein Navigationssystem bereitzustellen, welches mit geringem zusätzlichem Rechenaufwand zuverlässig eine Route ermitteln kann, die besonders angenehm zu befahren ist. Es ist weiterhin Aufgabe der vorliegenden Erfindung einem Fahrer ein Mittel zur Verfügung zu stellen, mit dem dieser in der Lage ist, eine Route entsprechend ihrer Kurvigkeit auszuwählen.

Offenbarung der Erfindung

Zur Lösung dieser Aufgabe stellt die vorliegende Erfindung ein Verfahren zur Bestimmung einer Route in einem Streckennetz aus Streckenabschnitten bereit, umfassend die Schritte:

- Bereitstellen von Start- und Zieldaten für die Route,
- Bereitstellen von Streckeninformationen zur Beschreibung eines Streckennetzes, wobei jedem Streckenabschnitt des Streckennetzes eine Kurvigkeitsangabe zugeordnet ist,
- Bereitstellen einer optimalen Route abhängig von der Kurvigkeitsangabe, wobei die optimale Route mit einem Optimierungsverfahren durch Auswählen aus einer Anzahl von möglichen Routen entsprechend eines abhängig von den Kurvigkeitsangaben ermittelten Kostenwerts bestimmt wird.

Beim erfindungsgemäßen Verfahren können bei der Routenauswahl aufgrund ihrer Kurvigkeiten unpassierbare oder ungeeignete Streckenabschnitte durch die Vergabe von höheren Kostenwerten berücksichtigt und gemieden werden. Weiterhin ermöglicht es das erfindungsgemäße Verfahren, die Kostenwerte aufgrund der Kurvigkeit der Streckenabschnitte mit anderen Kostenwerten aufgrund weiterer Routenoptionen zu kombinieren. Somit kann das erfindungsgemäße Verfahren problemlos mit bekannten Routenoptionen kombiniert werden.

Die Kurvigkeitsangabe für einen Streckenabschnitt kann einen Kurvigkeitswert enthalten, der einfach die Reziproke des minimalen Kurvenradius sein kann, der in diesem Streckenabschnitt auftritt, aber der auch als Gesamt-Kurvigkeitswert $K_{Streckenabschnitt}$ für den Streckenabschnitt aus:

$$K_{Streckenabschnitt} = \int\limits_{Streckenabschnitt} \sqrt{K}\, ds$$

berechnet werden kann, wobei K die Krümmung (den reziproken Wert des Krümmungsradius) für jeden Punkt des Streckenabschnitts und s die entlang dem Streckenabschnitt gemessene Entfernung angibt. Alternativ oder zusätzlich kann die Kurvigkeitsangabe auch einen Wert für den minimalen Kurvenradius enthalten.

Bei einer Ausführungsform der Erfindung sind hierbei die Kurvigkeitsangaben zusammen mit den Streckeninformationen im Voraus abgespeichert und können aus einem Speicher ausgelesen werden, aber es ist ebenfalls denkbar, dass die Kurvigkeitsangaben bei jeder Routenermittlung aus den Knotenpunktkoordinaten jedes Streckenabschnitts neu berechnet werden.

Weiterhin kann vorgesehen sein, dass für jede Kreuzung eine vom minimalen Kurvenradius dieser Kreuzung abhängige Kurvigkeitsangabe bestimmt wird, und dass die aus den Kurvigkeitsangaben ermittelten Kostenwerte der Kreuzungen bei der Auswahl der optimalen Route berücksichtigt werden. Ein minimaler Kurvenradius für eine Kreuzung muss hierbei für jede mögliche Kombination von Einfahrstraße und Ausfahrstraße in einer Übergangsmatrix bestimmt werden. Hiermit kann sichergestellt werden, dass auch bei der Auswahl von Kreuzungen keine übermäßig engen Kurvenradien ausgewählt werden, und dass die Route somit angenehm zu befahren und für das Fahrzeug passierbar ist.

Um eine Route auszuwählen, die für ein Fahrzeug, wie beispielsweise einen LKW oder ein Gespann, passierbar ist, können Streckenabschnitte und/oder Kreuzungen, deren minimaler Kurvenradius einen vorgegebenen Grenzwert unterschreitet, von der Routenauswahl ausgeschlossen werden. Hierdurch wird, ähnlich wie bei den bekannten Routenoptionen zum Meiden von Mautstraßen, Tunneln oder Autobahnen, ohne zusätzlichen Rechenaufwand einfach und zuverlässig sichergestellt, dass die ausgewählte Route den Anforderungen des Fahrers entspricht.

Gemäß einer Ausführungsform kann abhängig von einem bereitgestellten Wert für eine maximale Querbeschleunigung und dem Kurvigkeitswert eine Fahrzeit für den Streckenabschnitt ermittelt werden und die ermittelte Fahrzeit bei der Auswahl der optimalen Route berücksichtigt werden.

Beim Durchfahren einer Kurve tritt eine Querbeschleunigung a auf, die aus

$$a = v^2 \cdot K$$

berechnet werden kann, wobei v die Geschwindigkeit und K die aktuelle Krümmung als Reziproke des Kurvenradius angibt.

Bei einem vorgegebenen Wert für eine maximale Querbeschleunigung a und dem wie oben erläutert bestimmten Gesamt-Kurvigkeitswert $K_{Streckenabschnitt}$ für den Streckenabschnitt ergibt

$$t = \frac{K_{Streckenabschnitt}}{\sqrt{a}}$$

dann eine zusätzliche Zeit t, die ein Fahrer unter Ausnutzung dieser maximalen Querbeschleunigung für die Kurven des Streckenabschnitts gebraucht hätte. (Diese zusätzliche Zeit t entspricht hierbei keiner realen Fahrzeit, sondern gibt lediglich einen Wert für die Kurvigkeit der Strecke an.)

Beim erfindungsgemäßen Verfahren kann die Fahrzeit ermittelt werden, indem eine aus der Streckenlänge und der typischen Geschwindigkeit des Streckenabschnitts ermittelten Zeit und einer aus dem bereitgestellten Wert für eine maximale Querbeschleunigung und dem Kurvigkeitswert ermittelte Zeit linear kombiniert werden. Somit kann mit einem gegenüber der bekannten Routenoption "minimale Fahrzeit" nur geringfügig erhöhten Rechenaufwand eine Route ausgewählt werden, welche möglichst bequem zu fahren ist, da sie sehr kurvige Strecken meidet und Strecken mit geringer Kurvigkeit bevorzugt.

Ein bestimmter Wert für die maximale Querbeschleunigung, den ein Fahrer für eine Routenermittlung einmal gewählt hat, kann hierbei in einem Datenprofil für diesen Fahrer abgespeichert werden. Somit kann bei weiteren Routenermittlungen für denselben Fahrer diese Option zusammen mit seinen anderen abgespeicherten Profildaten und Präferenzen automatisch berücksichtigt werden, ohne dass der Fahrer wiederholt Datenwerte eingeben müsste.

Die Kostenwerte von Streckenabschnitten können, im Gegensatz zur voranstehend beschriebenen Option, auch derart festgesetzt werden, dass sie mit steigenden Werten für die Kurvigkeit kleiner werden, insbesondere auch negativ, so dass die Route von stark kurvigen Streckenabschnitten angezogen wird. Diese Option ist insbesondere für Motorradfahrer von Interesse, die eine möglichst kurvige Route bevorzugen.

Weiterhin stellt die Erfindung noch ein Verfahren zur Darstellung eines Streckennetzes in einer Kartendarstellung bereit, wobei für jeden Streckenabschnitt ein mittlerer Kurvigkeitswert angezeigt wird. In einem Modus "Kurvenanzeige" der Kartendarstellung werden hierbei die Streckenabschnitte beispielsweise nicht nach dem Straßentyp, sondern durch eine von dem Kurvigkeitswert/Streckenabschnittslänge abhängige Linienstärke des angezeigten Streckenabschnittes und/oder durch eine von dem Quotienten Kurvigkeitswert/Streckenabschnittslänge abhängige Farbigkeit und/oder Helligkeit des angezeigten Streckenabschnittes dargestellt. Dies ist insbesondere für Motorradfahrer interessant, die so in einer Kartendarstellung gezielt nach möglichst kurvigen Routen suchen können.

Schließlich stellt die vorliegende Erfindung ein Navigationssystem bereit, umfassend eine Dateneingabevorrichtung, eine Datenausgabevorrichtung, einen Speicher für Streckeninformationen und eine CPU, wobei das erfindungsgemäße Navigationssystem dadurch gekennzeichnet ist, dass die CPU derart ausgestaltet ist, dass sie, abhängig von einem Kurvigkeitswert für jeden Streckenabschnitt eines Streckennetzes eine optimale Route bereitstellt, welche mit einem Optimierungsverfahren durch Auswählen aus einer Anzahl von möglichen Routen entsprechend eines abhängig von den Kurvigkeitswerten ermittelten Kostenwerts bestimmt wird. Mit einem derartigen Navigationssystem kann, wie voranstehend in Zusammenhang mit dem erfindungsgemäßen Verfahren erläutert, einfach und zuverlässig eine besonders angenehm zu befahrende Route ausgewählt werden.

Beschreibung der Ausführungsformen

Im Folgenden wird eine bevorzugte Ausführungsform der vorliegenden Erfindung beispielhaft anhand der beigefügten Zeichnung beschrieben.

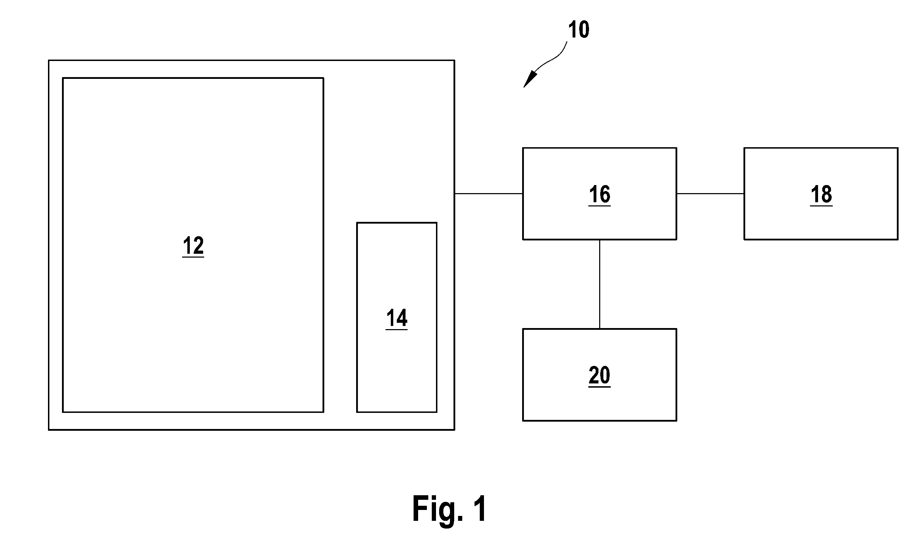

Wie in Fig. 1 gezeigt ist, weist ein erfindungsgemäßes Navigationssystem 10 eine Anzeigevorrichtung 12 mit einer Tastatur 14 zur Dateneingabe auf. Weiterhin umfasst es eine CPU 16, die mit einem Datenspeicher 18 und gegebenenfalls einer akustischen Ausgabevorrichtung 20 verbunden ist. Das Navigationssystem 10 kann selbstverständlich noch weitere Komponenten umfassen, welche allgemein bei Navigationssystemen bekannt sind und beispielsweise zur Dateneingabe (GPS-Empfänger oder andere Sensoren zum Erfassen des aktuellen Orts, Rundfunk zum Empfang von Verkehrsinformationen, weitere Dateneingabevorrichtungen, wie beispielsweise ein berührungsempfindlicher Bildschirm, usw.), zur Datenspeicherung (CD-ROM-Laufwerk oder dergleichen für Datenträger, die weitere Streckeninformationen und/oder Programme enthalten) oder zur Datenausgabe (weitere Displays und/oder andere Ausgabevorrichtungen) dienen.

Der Fahrer gibt über die Tastatur 14 Zieldaten (und gegebenenfalls auch Daten zum Startpunkt) ein, wobei, wie bereits von herkömmlichen Navigationssystemen bekannt, mittels Sprachausgabe oder mittels einer auf der Anzeigevorrichtung 12 dargestellten Menüführung Eingabehilfen vorgesehen sein können. Weiterhin kann der Fahrer über die Tastatur 14 verschiedene Routenoptionen (schnellste Route, kürzeste Route, usw.)

auswählen oder ein bereits im Speicher 18 abgespeichertes Fahrerprofil auswählen, das bereits Einstellungen für einige oder sämtliche der auszuwählenden Routenoptionen enthält. Auch eine vom Fahrer gewünschte maximale Querbeschleunigung oder ein für das Fahrzeug noch passierbarer minimaler Kurvenradius können entweder vom Fahrer direkt eingegeben oder aus einem gespeicherten Fahrerprofil übernommen werden.

Nach Ermittlung von Start- und Zieldaten liest die CPU 16 aus dem Speicher 18 die relevanten Streckeninformationen für das zu berücksichtigende Streckennetz heraus. Hierbei können Kurvigkeitsangaben, die die minimalen Kurvenradien und die Kurvigkeitswerte $K_{Streckenabschnitt}$ für jeden Streckenabschnitt und jede Kreuzung angeben, bereits zusammen mit den anderen Streckeninformationen (Knotenpunktkoordinaten, Straßentyp, usw.) gespeichert sein, oder diese Kurvigkeitswerte können, wie voranstehend beschrieben, von der CPU 16 bei Bedarf ermittelt werden.

Die jeweiligen Quotienten $K_{Streckenabschnitt}$/Streckenabschnittslänge, die die mittlere Kurvigkeit der Streckenabschnitte angeben, können außer zum Auswählen der optimalen Route auch für die Kartendarstellung in der Anzeigevorrichtung 12 genutzt werden, um beispielsweise einen Streckenabschnitte entsprechend seiner Kurvigkeit einzufärben oder mit unterschiedlichen Linienstärken einzuzeichnen. Dabei wird z.B. die Farbe und/oder die Helligkeit der Streckenabschnitte entsprechend des dem Streckenabschnitt zugeordneten Quotienten des mittleren Kurvigkeitswertes $K_{Streckenabschnitt}$/Streckenabschnittslänge gewählt und/oder die Liniendicke umso größer gewählt, je größer der zugeordnete Quotient mittlere Kurvigkeitswert $K_{Streckenabschnitt}$/Streckenabschnittsiänge ist, oder umgekehrt.

Die Auswahl der Route unter Beachtung der vom Fahrer ausgewählten Routenoptionen erfolgt auf grundsätzlich bekannte Art und Weise gemäß einem bekannten Routenbestimmungsverfahren bzw. Routenoptimierungsverfahren, die hierin nicht näher beschrieben werden. Diese Routenbestimmungsverfahren verwenden Kostenwerte, die jedem Streckenabschnitt abhängig von den jeweils ausgewählten Optionen zugeordnet werden. Das Routenbestimmungsverfahren sucht dann die Route mit dem geringsten Gesamtkostenwert.

Die Kostenwerte können nur von den Kurvigkeitswerten $K_{Streckenabschnitt}$ abhängen oder in Verbindung mit weiteren Optimierungsparametern, wie z.B. der Fahrzeit, bestimmt werden. Eine besonders einfache Verbindung der Routenoption "kurvige Strecken meiden" mit der Routenoption "minimale Fahrzeit" kann hierbei realisiert werden, indem jedem Streckenabschnitt eine Gesamt-Fahrzeit zugeordnet wird, die sich gemäß:

$$t_{Gesamt} = \frac{s_{gesamt}}{v_{typisch}} + \frac{K_{Streckenabschnitt}}{\sqrt{a}}$$

aus der Fahrzeit für den Streckenabschnitt mit der Länge $s_{gesamt}$ bei der für diesen Streckenabschnitt typischen Geschwindigkeit $v_{typisch}$ und einer zusätzlichen Zeit zusammensetzt, die aus dem Kurvigkeitswert $K_{Streckenabschnitt}$ des Streckenabschnitts und der vom Fahrer angegebenen maximalen Querbeschleunigung a wie oben erläutert bestimmt ist und mit einem Wichtungsfaktor c in die Gesamt-Fahrzeit eingeht. Die Fahrzeit $t_{Gesamt}$ wird somit um eine Zeit erhöht, die sich aufgrund der langsameren Fahrt durch die Kurven aufgrund deren Kurvigkeit ergibt.

Wenn der Fahrer angegeben hat, dass ein Grenzwert für den minimalen Kurvenradius nicht unterschritten werden darf, z.B. aufgrund von Einschränkungen des Kraftfahrzeugs, werden Streckenabschnitte und Kreuzungen, deren minimaler Kurvenradius kleiner als dieser Grenzwert ist, bei der Routenauswahl nicht berücksichtigt. Auf diese Art und Weise werden unpassierbare Streckenabschnitte und Kreuzungen gar nicht erst ausgewählt und es kann sichergestellt werden, dass die ermittelte Route auf keinen Fall zu enge Kurven oder zu enge Kreuzungen für das Fahrzeug enthält.

Umgekehrt kann als Kostenwert für jeden Streckenabschnitt auch ein negativer Kurvigkeitswert $K_{Streckenabschnitt}$ gewählt werden, so dass die Route von kurvigen Strecken angezogen wird. Auch diese Option kann selbstverständlich mit anderen Routenoptionen kombiniert werden.

Die ermittelte Route wird dann in der Anzeigevorrichtung 12 dargestellt und Navigationsanweisungen können dem Fahrer während der Fahrt über die Anzeigevorrichtung 12 oder über eine akustische Ausgabevorrichtung 20 bereitgestellt werden.

**Patentansprüche**

1. Verfahren zur Bestimmung einer Route aus Streckenabschnitten, umfassend die Schritte:

   - Bereitstellen von Start- und Zieldaten für die Route,
   - Bereitstellen von Streckeninformationen zur Beschreibung eines Streckennetzes, wobei jedem Streckenabschnitt des Streckennetzes eine Kurvigkeitsangabe ($K_{Streckenabschnitt}$) zugeordnet ist,
   - Bereitstellen einer optimalen Route abhängig von der Kurvigkeitsangabe ($K_{Streckenabschnitt}$), wobei die optimale Route in einem Optimierungsverfahren durch Auswählen aus einer Anzahl von möglichen Routen mit Hilfe eines abhängig von den Kurvigkeitsangaben ($K_{Streckenabschnitt}$) ermittelten Kostenwerts bestimmt wird.

2. Verfahren nach Anspruch 1, **dadurch gekennzeichnet, dass** die Kurvigkeitsangaben ($K_{Streckenabschnitt}$) zusammen mit den Streckeninformationen im Voraus abgespeichert sind und aus einem Speicher (18) ausgelesen werden.

3. Verfahren nach Anspruch 1 oder 2, **dadurch gekennzeichnet, dass** für jede Kreuzung eine vom minimalen Kurvenradius dieser Kreuzung abhängige Kurvigkeitsangabe bestimmt wird, und dass aus den Kurvigkeitsangaben ermittelte Kostenwerte von Kreuzungen bei der Auswahl der optimalen Route berücksichtigt werden.

4. Verfahren nach einem der Ansprüche 1 bis 3, **dadurch gekennzeichnet, dass** Streckenabschnitte und/oder Kreuzungen, deren minimaler Kurvenradius einen vorgegebenen Grenzwert unterschreitet, von der Routenauswahl ausgeschlossen werden.

5. Verfahren nach einem der Ansprüche 1 bis 4, **dadurch gekennzeichnet, dass** abhängig von einem bereitgestellten Wert für eine maximale Querbeschleunigung (a) und einem Kurvigkeitswert ($K_{Streckenabschnitt}$) der Kurvigkeitsangabe eine Fahrzeit für den Streckenabschnitt ermittelt wird und die ermittelte Fahrzeit bei der Auswahl der optimalen Route berücksichtigt wird.

6. Verfahren nach Anspruch 5, **dadurch gekennzeichnet, dass** die Fahrzeit ermittelt wird, indem eine aus der Streckenlänge ($s_{gesamt}$) und der typischen Geschwindigkeit ($V_{typisch}$) des Streckenabschnitts ermittelten Zeit und einer aus dem bereitgestellten Wert für eine maximale Querbeschleunigung (a) und dem Kurvigkeitswert ($K_{Streckenabschnitt}$) ermittelte Zeit linear kombiniert werden.

7. Verfahren nach Anspruch 5 oder 6, **dadurch gekennzeichnet, dass** der Wert für die maximale Querbeschleunigung (a), den ein Fahrer für eine Routenauswahl gewählt hat, in einem Datenprofil für diesen Fahrer abgespeichert wird.

8. Verfahren nach Anspruch 1, **dadurch gekennzeichnet, dass** die Kostenwerte von Streckenabschnitten mit steigenden Kurvigkeitswerten ($K_{Strekkenabschnitt}$) kleiner werden.

9. Verfahren zur Darstellung eines Streckennetzes in einer Kartendarstellung, wobei für jeden Streckenabschnitt ein mittlerer Kurvigkeitswert ($K_{Streckenabschnitt}$/Streckenabschnittslänge) angezeigt wird, insbesondere durch eine von dem mittleren Kurvigkeitswert ($K_{Strekke\text{-}nabschnitt}$/Streckenabschnittslänge) abhängige Linienstärke des angezeigten Strekkenabschnittes und/oder durch eine von dem mittleren Kurvigkeitswert ($K_{Streckenabschnitt}$/Streckenabschnittslänge) abhängige Farbigkeit und/oder Helligkeit des angezeigten Streckenabschnittes.

10. Navigationssystem, umfassend:

> - eine Dateneingabevorrichtung (14),
> - eine Datenausgabevorrichtung (12, 20),
> - einen Speicher (18) für Streckeninformationen und
> - eine CPU (16),
> **dadurch gekennzeichnet, dass** die CPU (16) derart ausgestaltet ist, dass sie, abhängig von einer Kurvigkeitsangabe ($K_{Streckenabschnitt}$) für jeden Strekkenabschnitt eines Streckennetzes eine optimale Route bereitstellt, welche mit einem Optimierungsverfahren durch Auswählen aus einer Anzahl von möglichen Routen entsprechend eines abhängig von den Kurvigkeitsangaben ($K_{Streckenabschnitt}$) ermittelten Kostenwerts bestimmt wird.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361407 A1